# EUROPEAN PATENT SPECIFICATION

(11) **EP 2 334 541 B1**
(45) Date of publication and mention of the grant of the patent: **31.07.2013**
(21) Application number: 09756805.9
(22) Date of filing: 23.09.2009
(51) Int. Cl.: B62D 49/04, B62D 49/06, E01H 5/06

(54) **UNIVERSAL PLATE FOR FITTING IMPLEMENTS, IN PARTICULAR SNOWPLOUGHS, ON MOTOR VEHICLES**
UNIVERSALPLATTE ZUM ANBRINGEN VON GERÄTEN, INSBESONDERE SCHNEEPFLÜGEN, AN KRAFTFAHRZEUGE
PLAQUE UNIVERSELLE POUR LE MONTAGE D ÉLÉMENTS, EN PARTICULIER DES CHASSE-NEIGE, SUR DES VÉHICULES MOTORISÉS

(30) Priority: 29.09.2008 IT BO20080590
(43) Date of publication of application: 22.06.2011
(73) Proprietor: Assaloni.com, 40042 Lizzano in Belvedere (BO) (IT)
(72) Inventor: FABBRI, Samuele, I-40042 Lizzano in Belvedere (BO) (IT)
(74) Representative: Fuochi, Riccardo
(86) International application number: PCT/IB2009/054171
(87) International publication number: WO 2010/035229

(56) References cited:
- WO-A1-2007/086756
- DE-A1- 2 138 671
- US-A- 3 483 641
- US-A- 5 647 153
- US-A1- 2007 056 192

## Description

### TECHNICAL FIELD OF THE INVENTION

The present invention relates to a plate for the quick coupling of implements and miscellaneous accessories to motor vehicles such as trucks, tractors or other work vehicles.

In particular, the invention relates to a universal plate for fitting snowploughs on motor vehicles.

Document DE 2138671 A1 describes a snow plough attachment plate according to the preamble of independent claim 1. BACKGROUND ART

The use of trucks as specific work vehicles such as public utility vehicles, like salt spreaders, snowploughs or vehicles dedicated to cleaning roads and areas, is, as is well known, widespread thanks to the operating flexibility which said vehicles provide with respect to specifically made and dedicated vehicles, enabling operating bodies to save considerable amounts of money in terms of purchasing and running costs.

The above flexibility is related to the ability to connect to the front of the vehicles the various implements required to carry out the different jobs for which they are to be used, in particular with the aid of plates, fastened to the vehicles themselves, suitable for allowing easy fitting and equally easy removal of such implements from the vehicles.

It is easy to appreciate that the different types of work implements that can be used have specific connection means, suitable for the dimensions, the weights and required function, and consequently the relevant connection to a same motor vehicle appears hard to achieve with the aid of a single fitting plate that can be stably fastened to the vehicle.

The problem, partially solved by regulations introduced to standardise dimensions and positions of fasteners and couplings of determinate types of fitting plates, furthermore appears evident considering both the large variety of implements available on the market and in consideration of the existerice of different regulations for the same type of fitting plate.

The need is therefore felt to provide an interface element between the motor vehicles and the work implements that allows the alternative fitting of different implements having different quick-coupling systems.

### OBJECTS OF THE INVENTION

One object of the present invention is to improve the state of the art.

Another object of the present invention is to propose a plate for fitting implements, in particular snowploughs, on motor vehicles such as trucks, tractors or other work vehicles, which permits fitting different implements having different fasteners and couplings.

A further object of the present invention is to provide a plate for fitting implements, in particular snowploughs, on motor vehicles such as trucks, tractors or other work vehicles, which permits quick fitting/removal of the blades from said plate.

These and other objects are achieved by a plate for fitting miscellaneous implements, in particular snowploughs, on motor vehicles such as trucks, tractors or other work vehicles, in which, such plate comprises a first configuration of fasteners and couplings for said implements in a first work position of said plate on said motor vehicles and at least a second configuration of fasteners and couplings for said implements in at least a second work position of said plate on said motor vehicles.

The plate can be made in various conformations but preferably it has a substantially rectangular shape with a first side parallel to the road surface and a second side perpendicular to said first side. The work positions of the plate are obtained by turning the plate itself, in particular by 180 degrees, around a longitudinal axis of said motor vehicles passing through the geometric centre of the plate. Advantageously, the couplings obtained in the plate of the invention comprise countersunk profile cavities arranged along at least a longer side of the plate, said cavities being suitable for allowing the gravity housing of cuneiform appendices present in the coupling surface of said implements. Furthermore, the fasteners of said implements by means of screws or other removable means are obtained in openings arranged along the shorter sides of the plate.

In particular, said configurations of couplings and fasteners comply with applicable regulations in the sector in relation to the position off the ground and the one to the other of said couplings and fasteners. In one possible embodiment, the fitting plate comprises a central opening in which is located at least one coupling point of said implements. Preferably, said central opening is of rectangular shape; furthermore, it can be closed by means of a further plate in which are obtained further coupling points of the implements. Said further coupling points are arranged in particular at round openings arranged symmetrically in said further closing plate of the central opening.

The advantages relating to the plate of the invention appear evident; the plate can in fact be used for fitting different work implements having different systems of couplings and fasteners. In this respect, it is enough to change the position of the plate on the motor vehicle to have a different coupling and fastener configuration, suitable for fitting a different implement. Further solutions and construction characteristics of the plate allow fitting still other different implements.

### BRIEF DESCRIPTION OF THE DRAWINGS

Other characteristics and advantages of the invention will become more evident from the description of preferred embodiments of the present invention, illustrated purely as an example but not limited to the annexed drawings in which:
the figure 1 shows a perspective view of an example of a plate for fitting miscellaneous implements on a motor vehicle according to the present invention;
the figure 2 shows a rear view of the plate of figure 1;
the figure 3 shows a front view of the plate of figure 1;
the figures 4 and 5 show the plate according to the invention in two different operating positions;
the figure 6 shows the plate of the invention according to a different embodiment;
the figure 7 shows a rear view of the plate of figure 6;
the figure 8 shows a front view of the plate of figure 6.

### EMBODIMENTS OF THE INVENTION

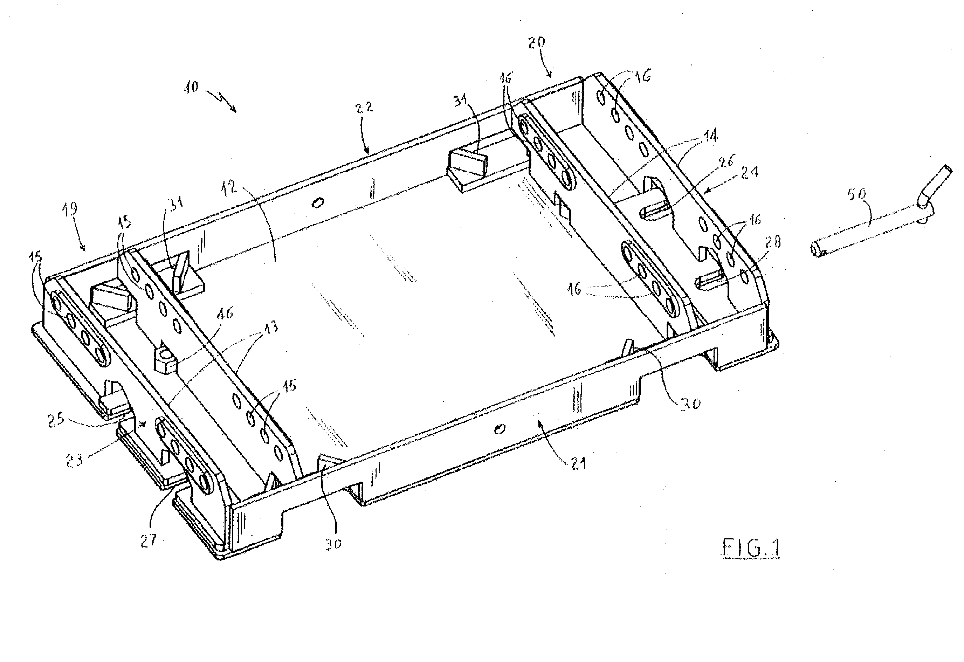

With reference to the figure 1, a possible embodiment is there indicated by 10 of a fitting plate according to the present invention. Such plate 10 is operatively fitted on the front of a motor vehicle, e.g., on a truck, so as to support implements suitable for pushing or moving objects or materials arranged on the road surface during the forward movement of the motor vehicle. The plate 10 has operatively a front face, 11, and a rear face, 12, with respect to the direction of forward movement of the motor vehicle. The front face 11 faces the implements, while the rear face 12 comprises means of engagement 19 and 20 with the motor vehicle.

In the described example, such means of engagement with the motor vehicle, 19 and 20, comprise respective pairs 13 and 14 of engagement plates parallel and integral with the plate 10, operatively arranged crossways with respect to the longitudinal axis of the motor vehicle, in particular substantially vertical and peripheral with respect to the plate 10. Each pair of engagement plates, 13 and 14, is suitable for coupling with a corresponding engagement bar, not illustrated, integral with the front part of the motor vehicle. Each pair of engagement plates 13 and 14 comprises a respective series of through holes, 15 and 16, suitable for accommodating at least an engagement pin 50; said pin 50 operatively crosses such holes, 15 or 16, and, at the same time, corresponding holes in the above bars integral with the vehicle.

The plate 10 is suitable for supporting in particular implements consisting of snowploughs; it has a geometric shape having two opposite sides 21 and 22 parallel the one with the other and operatively parallel, in the work positions envisaged for this plate, with the road surface. In particular, in the example described in the illustrations, the plate 10 has a substantially rectangular shape with two longer sides 21 and 22 parallel with the road surface and two shorter sides 23 and 24 substantially perpendicular to the longer sides 21 and 22.

The fitting of the snowploughs, not shown, is done by the gravity fitting of triangular or pseudo-triangular appendices, integral with the snowplough, in corresponding couplings, 30 or 31, present along the opposite sides 21 and 22 of the plate 10 comprising countersunk profile cavities. The snowplough, once coupled to the plate 10, is fastened to this by means of fasteners obtained in openings, 25 or 27, arranged along the side 23 and in openings, 26 or 28, arranged along the side 24.

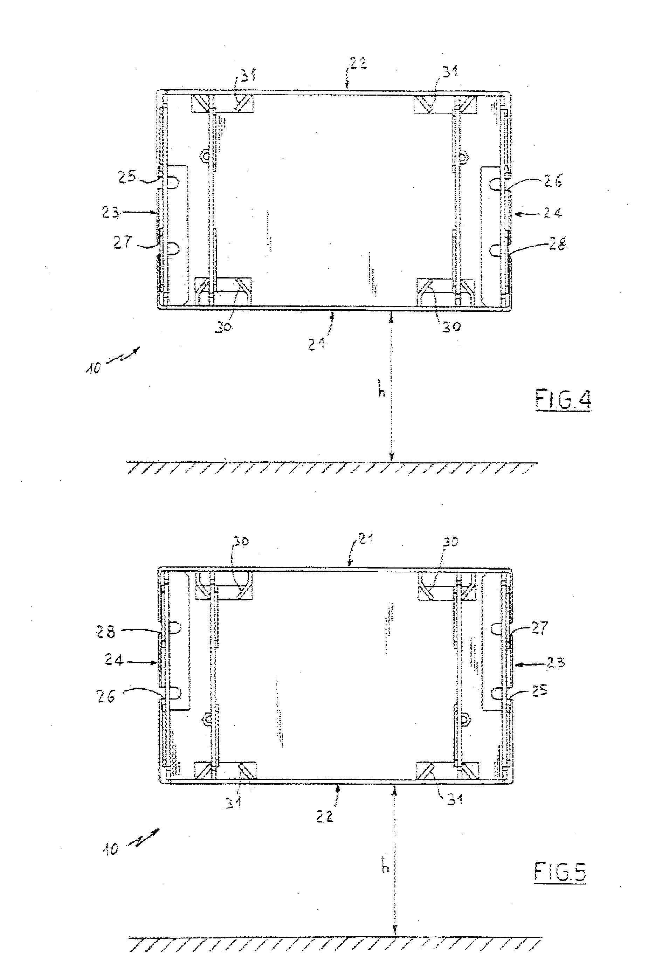

Applicable regulations set a number of standards with respect to the coupling and fastener configurations of fitting plates, defining relative positions the one to the other and with respect to the ground and also as regards the shape and dimension of both the plate and the couplings and fasteners, so as to be able to make fitting plates suitable for all the implements envisaging a specific type of coupling and fastener. In particular, a first regulation envisages a coupling and fastener configuration in which the couplings 31 on the upper side 22 of the plate and the fasteners 27 and 28, on the sides 23 and 24 respectively, are arranged as shown in figure 4, while, a second regulation requires a configuration in which the couplings 30 on the upper side 21 and the fasteners 25 and 26, on the sides 23 and 24 respectively, are arranged as in figure 5.

According to the known technique, two distinct plates are therefore required to allow a same motor vehicle to use implements having couplings and fasteners according to the one or the other of the two regulations, one plate to allow the connection of implements in compliance with the first regulation and another plate to allow the connection of implements in compliance with the second regulation.

The plate 10 according to the present invention, on the other hand, satisfies both the above regulations; in fact, it satisfies the first regulation if it is fitted with the side 22 at the top and with the side 21 at the bottom, using the couplings 31 and the fasteners 27 and 28, and satisfies the second regulation if it is fitted turned by 180° with respect to the configuration of the first regulation, with the side 21 at the top and the side 22 at the bottom, using the couplings 30 and the fasteners 25 and 26.

It should be noticed that in both regulations, a same parameter is complied with consisting of the minimum height off the ground of the plate, height that must have exactly the same value, h, in the two cases, while, the height off the ground of the couplings, arranged along the upper side, can certainly differ, according to the height dimension of the plate required by the regulations in the one or the other case.

This, in the plate of the invention, is satisfied by obtaining the couplings 31 exactly at the edge of the plate itself, while the other couplings, 30, are obtained, as we can see in the various illustrations, at a certain distance from the edge of the plate and therefore, in work position, they reach a height off the ground which is lower than that of the couplings 31, the minimum height off the ground of the plate being equal.

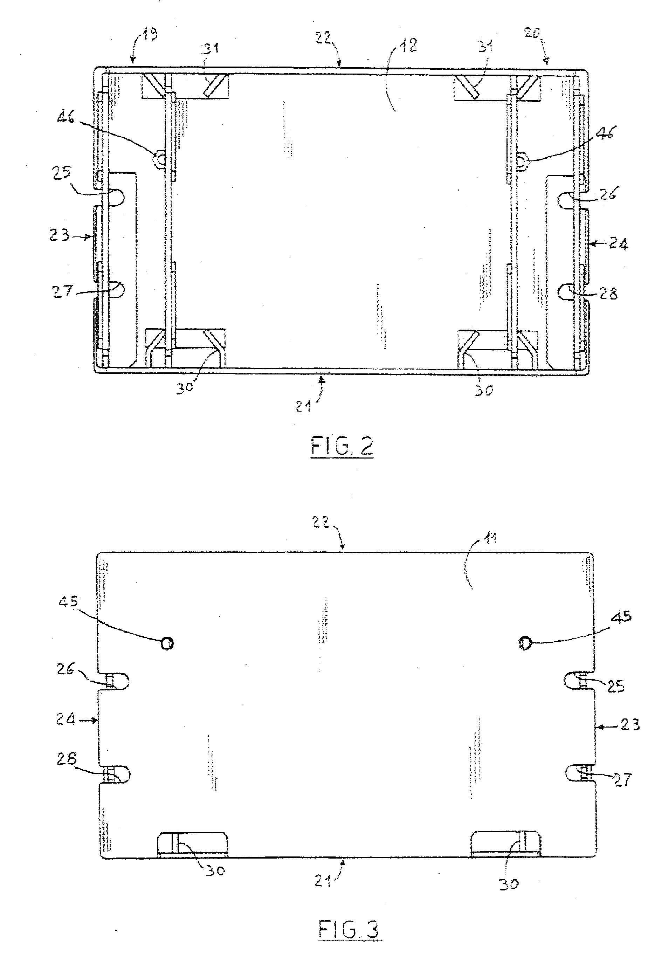

To complete the description of this example of embodiment of the plate according to the invention, indicated by 45, in fig.3, are two further fastening points located symmetrically in the body of the plate, envisaged for some types of implements, as an alternative or in conjunction with the above-described side fastener points, said fastener points consisting of round openings at which are arranged, in the rear face 12 of the plate, threaded nuts, 46, in which engage suitable screw means integral with the implements to be connected, the construction characteristics and the position of these fastening points being also in compliance with the regulations of the sector.

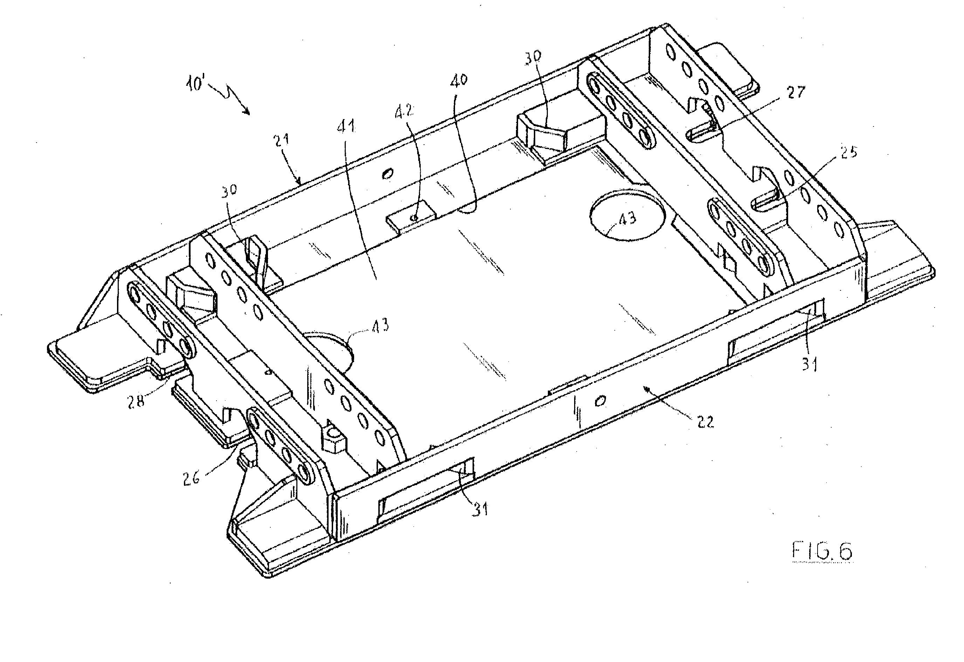

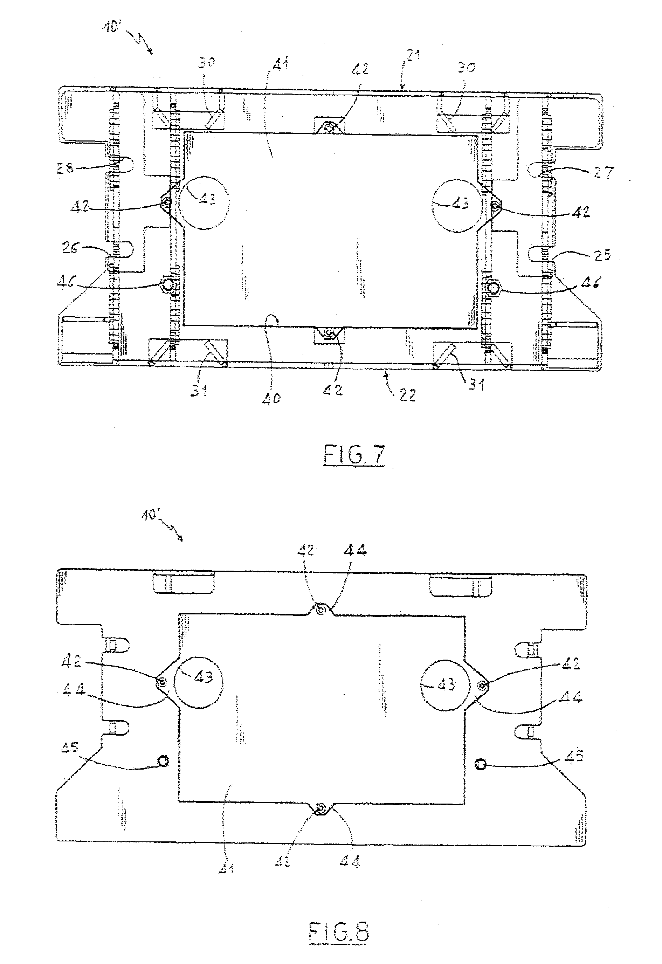

According to an alternative embodiment of the present invention, a fitting plate, 10', substantially identical as regards coupling and fastener shape and configuration to the plate 10, has a central opening, 40, as shown in the figures 6, 7 and 8, in particular rectangular, suitable for allowing a further coupling point for differently-shaped implements, as well as a possible partial housing of a terminal portion of said implements, giving the plate of the invention even greater flexibility.

The central opening 40 can furthermore be closed by means of a closing plate, 41, that can be fastened to the fitting plate 10', e.g., by means of screws 42 positioned at peripheral appendices, 44, of said plate 41, and on said closing plate 41 are obtained further coupling points for still other different work implements. In particular, such further coupling points are arranged at round openings 43 arranged symmetrically on the above closing plate 41.

These and other variations and changes of a practical-applicative nature can be made to the plate of the present invention, always without affecting the advantages deriving from them in terms of coupling flexibility and immediacy of various implements and while always remaining within the protection scope envisaged by the following claims.

The peripheral shape of the plate can, e.g., be different still, just as the anchoring means of the same to the motor vehicle can also vary. In the latter, further anchoring bars could be provided, arranged so as to allow plate positions different or complementary to those suggested above according to preferable procedure.

Furthermore, the present invention, as conceived, is susceptible to numerous changes and variations, all falling within the protection scope offered by the claims.

## Claims

1. Plate (10) for fitting work implements, in particular snowploughs, on motor vehicles such as trucks, tractors or other work vehicles, whereby the plate (10) comprises a first configuration of fasteners and couplings (30, 25-28, 45; 40, 25-28; 43, 25-28) for said implements in a first work position of said plate (10) on said motor vehicles, **characterized in that** the plate (10) further comprises at least a second configuration of fasteners and couplings (31, 25-28, 45; 43, 25-28; 40, 25-28) for said implements in at least a second work position of said plate on said motor vehicles.

2. Plate for fitting work implements according to the claim 1, having a substantially rectangular shape, said work positions of said plate (10) on said motor vehicles being obtained by turning the plate (10) around a longitudinal axis of said motor vehicles passing through the centre of said plate.

3. Plate for fitting work implements according to the claim 1 or 2, in which a second work position of said plate is obtained by turning by 180 degrees said plate around a longitudinal axis of said motor vehicles passing through the centre of said plate.

4. Plate for fitting work implements according to any of the preceding claims, wherein said couplings are comprised in countersunk profile cavities (30; 31) arranged along at least a side (21; 22) of the plate (10), said side being operatively arranged horizontally, said cavities (30; 31) being suitable for allowing the gravity housing of appendices present in the coupling surface of said implements.

5. Plate for fitting work implements according to the claim 1, wherein said fasteners are obtained in openings arranged along the sides of the plate which are operatively arranged vertically.

6. Plate for fitting work implements according to any of the preceding claims, wherein said configurations of couplings and fasteners (30, 25-28, 45; 40, 25-28; 43, 25-28) comply with applicable regulations in the sector in relation to the position off the ground and the one to the other of said couplings and fasteners.

7. Plate for fitting work implements according to any of the preceding claims, wherein said couplings (40, 25-28; 43, 25-28) are arranged inside said plate (10), at a distance from the edge of said at least one side (21, 22) of the plate (10).

8. Plate for fitting work implements according to any of the preceding claims, comprising openings (43) in which are located coupling or fastening points of said implements.

9. Plate for fitting work implements according to any of the preceding claims, comprising a central opening (40) with a substantially rectangular shape, in said opening being located at least a coupling point of said implements.

10. Plate for fitting work implements according to the claim 9, wherein said central opening (40) can be closed by means of a further plate (41) in which are obtained further coupling points (43) of said implements.

11. Plate for fitting work implements according to the claim 9 or 10, wherein said further coupling points are arranged at round openings (43) arranged symmetrically in said further closing plate (41) of said central opening.

## Patentansprüche

1. Platte (10) zum Anbauen von Arbeitsgeräten, insbesondere Schneepflügen, an Kraftfahrzeuge wie beispielsweise Lastkraftwagen, Traktoren oder andere Arbeitsfahrzeuge, wobei die Platte (10) eine erste Anordnung von Befestigungselementen und Kupplungen (30, 25-28, 45; 40, 25-28; 43, 25-28) für diese Arbeitsgeräte in einer ersten Arbeitsstellung der Platte (10) auf den Kraftfahrzeugen umfasst, **dadurch gekennzeichnet, dass** die Platte (10) ferner mindestens eine zweite Anordnung von Befestigungselementen und Kupplungen (31, 25-28, 45; 43, 25-28; 40, 25-28) für diese Arbeitsgeräte in mindestens einer zweiten Arbeitsstellung der Platte auf den Kraftfahrzeugen umfasst.

2. Platte zum Anbauen von Arbeitsgeräten nach Anspruch 1, die eine im Wesentlichen rechteckige Form hat, wobei die Arbeitsstellungen der Platte (10) auf den Kraftfahrzeugen durch Drehen der Platte (10) um eine Längsachse der Kraftfahrzeuge erhalten werden, die durch die Mitte dieser Platte verläuft.

3. Platte zum Anbauen von Arbeitsgeräten nach Anspruch 1 oder 2, wobei eine zweite Arbeitsstellung der Platte durch Drehen der Platte um 180 Grad um eine Längsachse der Kraftfahrzeuge erhalten wird, die durch die Mitte dieser Platte verläuft.

4. Platte zum Anbauen von Arbeitsgeräten nach einem der vorhergehenden Ansprüche, wobei die Kupplungen in versenkten Profilaussparungen (30; 31) enthalten sind, die entlang mindestens einer Seite (21; 22) der Platte (10) angeordnet sind, wobei diese Seite wirkungsmäßig waagrecht angeordnet ist, wobei die Aussparungen (30; 31) geeignet sind, die Aufnahme aufgrund der Schwerkraft von Ansätzen zu ermöglichen, die sich auf der Kupplungsfläche der Arbeitsgeräte befinden.

5. Platte zum Anbauen von Arbeitsgeräten nach Anspruch 1, wobei die Befestigungselemente in Öffnungen ausgeführt sind, die entlang Seiten der Platte angeordnet sind, die wirkungsmäßig senkrecht angeordnet sind.

6. Platte zum Anbauen von Arbeitsgeräten nach einem der vorhergehenden Ansprüche, wobei die Anordnungen von Kupplungen und Befestigungselementen (30, 25-28, 45; 40, 25-28; 43, 25-28) einschlägigen Bestimmungen der Branche in Bezug auf die Lage über dem Boden und zueinander der Kupplungen und Befestigungselemente entsprechen.

7. Platte zum Anbauen von Arbeitsgeräten nach einem der vorhergehenden Ansprüche, wobei die Kupplungen (40, 25-28; 43, 25-28) innerhalb der Platte (10) in einem Abstand vom Rand der mindestens einen Seite (21, 22) der Platte (10) angeordnet sind.

8. Platte zum Anbauen von Arbeitsgeräten nach einem der vorhergehenden Ansprüche, die Öffnungen (43) umfasst, in denen sich Kupplungs- oder Befestigungspunkte der Arbeitsgeräte befinden.

9. Platte zum Anbauen von Arbeitsgeräten nach einem der vorhergehenden Ansprüche, die eine zentrale Öffnung (40) mit einer im Wesentlichen rechteckigen Form umfasst, wobei sich in dieser Öffnung mindestens ein Kupplungspunkt der Arbeitsgeräte befindet.

10. Platte zum Anbauen von Arbeitsgeräten nach Anspruch 9, wobei die zentrale Öffnung (40) mit einer weiteren Platte (41) verschlossen werden kann, in der weitere Kupplungspunkte (43) der Arbeitsgeräte realisiert sind.

11. Platte zum Anbauen von Arbeitsgeräten nach Anspruch 9 oder 10, wobei die weiteren Kupplungspunkte bei runden Öffnungen (43) angeordnet sind, die symmetrisch in der weiteren Verschlussplatte (41) der zentralen Öffnung angeordnet sind.

## Revendications

1. Plaque (10) pour l'installation d'outils de travail, en particulier des lames de déneigement, sur des véhicules à moteur tels que des camions, tracteurs et autres véhicules de travail, moyennant quoi la plaque (10) comprend une première configuration d'éléments de fixation et d'accouplements (30, 25-28, 45; 40, 25-28; 43, 25-28) pour lesdits outils dans une première position de travail de ladite plaque (10) sur lesdits véhicules à moteur, **caractérisée en ce que** la plaque (10) comprend en outre au moins une deuxième configuration d'éléments de fixation et d'accouplements (31, 25-28, 45; 43, 25-28; 40, 25-28) pour lesdits outils dans au moins une deuxième position de travail de ladite plaque sur lesdits véhicules à moteur.

2. Plaque pour l'installation d'outils de travail selon la revendication 1, ayant une forme sensiblement rectangulaire, lesdites positions de travail de ladite plaque (10) sur lesdits véhicules à moteur étant obtenues en faisant tourner la plaque (10) autour d'un axe longitudinal desdits véhicules à moteur passant à travers le centre de ladite plaque.

3. Plaque pour l'installation d'outils de travail selon la revendication 1 ou 2, dans laquelle une deuxième position de travail de ladite plaque est obtenue en faisant tourner ladite plaque de 180 degrés autour d'un axe longitudinal desdits véhicules à moteur passant à travers le centre de ladite plaque.

4. Plaque pour l'installation d'outils de travail selon l'une quelconque des revendications précédentes, dans laquelle lesdits accouplements sont compris dans des cavités de profil évasé (30; 31) disposées le long d'au moins un côté (21; 22) de la plaque (10), ledit côté étant agencé fonctionnellement horizontalement, lesdites cavités (30; 31) étant adaptées pour permettre le logement par gravité d'appendices présents dans la surface d'accouplement desdits outils.

5. Plaque pour l'installation d'outils de travail selon la revendication 1, dans laquelle lesdits éléments de fixation sont obtenus dans des ouvertures disposées le long des côtés de la plaque qui sont agencés fonctionnellement verticalement.

6. Plaque pour l'installation d'outils de travail selon l'une quelconque des revendications précédentes, dans laquelle lesdites configurations d'accouplements et d'éléments de fixation (30, 25-28, 45; 40, 25-28; 43, 25-28) satisfont des règlementations applicables dans le secteur en relation avec la position au-dessus du sol et l'un avec l'autre desdits accouplements et éléments de fixation.

7. Plaque pour l'installation d'outils de travail selon l'une quelconque des revendications précédentes, dans laquelle lesdits accouplements (40, 25-28; 43, 25-28) sont agencés à l'intérieur de ladite plaque (10), à une distance d'un bord dudit au moins un côté (21, 22) de la plaque (10).

8. Plaque pour l'installation d'outils de travail selon l'une quelconque des revendications précédentes, comprenant des ouvertures (43) dans lesquelles sont situés des points d'accouplement ou de fixation desdits outils.

9. Plaque pour l'installation d'outils de travail selon l'une quelconque des revendications précédentes, comprenant une ouverture centrale (40) avec un profil sensiblement rectangulaire, dans ladite ouverture étant situé au moins un point d'accouplement desdits outils.

10. Plaque pour l'installation d'outils de travail selon la revendication 9, dans laquelle ladite ouverture centrale (40) peut être fermée au moyen d'une autre plaque (41) dans laquelle sont obtenus d'autres points d'accouplement (43) desdits outils.

11. Plaque pour l'installation d'outils de travail selon la revendication 9 ou 10, dans laquelle lesdits autres points d'accouplement sont agencés dans des ouvertures rondes (43) disposées symétriquement dans ladite autre plaque de fermeture (41) de ladite ouverture centrale.
